# EUROPEAN PATENT APPLICATION

(11) **EP 3 572 772 A1**
(43) Date of publication of application: **27.11.2019**
(21) Application number: 17892975.8
(22) Date of filing: 06.12.2017
(51) Int. Cl.: G01C 21/36, G01C 21/26, G08G 1/005, G09B 29/00, G09B 29/10

(54) **NAVIGATION SYSTEM, COMPUTER PROGRAM PRODUCT, AND ONBOARD DEVICE**

(30) Priority: 19.01.2017 JP 2017007480
(71) Applicant: Clarion Co., Ltd., Saitama-shi, Saitama 330-0081 (JP)
(72) Inventor: MATSUMOTO, Takashi, Tokyo 100-8280 (JP); NAGAI, Yasushi, Saitama-shi, Saitama 330-0081 (JP); HANO, Tsuyoshi, Saitama-shi, Saitama 330-0081 (JP)
(74) Representative: MERH-IP Matias Erny Reichl Hoffmann Patentanwälte PartG mbB
(86) International application number: PCT/JP2017/043838
(87) International publication number: WO 2018/135167

(57) **Abstract**

In a navigation system including a mobile terminal and an in-vehicle apparatus mounted on a vehicle, the in-vehicle apparatus includes a vehicle navigation unit to guide the vehicle from a vehicle navigation starting point to a vehicle navigation destination, and the mobile terminal includes: a display unit to present image information; a walking navigation unit to guide a route for movement on foot from a walking navigation starting point to a walking navigation destination; and a starting point output unit to output, to the display unit, a photographed image of surrounding of the vehicle navigation destination, and auxiliary information indicating the walking navigation starting point by combining with the photographed image.

## Description

### Technical Field

The present invention relates to a navigation system, a computer program product, and an in-vehicle apparatus.

### Background Art

For navigation, there are provided vehicle navigation mounted on a vehicle to guide the vehicle to a destination, and walking navigation mounted on a mobile terminal to guide a walker moving on foot to a destination. In addition, an end-to-end navigation system is known in which a vehicle navigation is used for a driving section of a vehicle, and a walker navigation system is combined and used for a section of movement on a foot after parking. PTL 1 discloses a navigation system in which an on-vehicle navigation device detects a vehicle direction when the vehicle is stopped and transmits vehicle direction information that is information of the vehicle direction, and a mobile terminal has a mobile terminal side display part to display a map and a guidance route, receives the vehicle direction information from the on-vehicle navigation device, displays the map and the guidance route on the mobile terminal side display part, and displays a vehicle direction figure indicating a vehicle direction on the map in an orientation determined on the basis of the vehicle direction information.

### Citation List

### Patent Literature

PTL 1: JP 2011-220861 A

### Summary of Invention

### Technical Problem

In the invention described in PTL 1, it is difficult to recognize a starting point for walking navigation.

### Solution to Problem

A navigation system according to a first aspect of the present invention is a navigation system including a mobile terminal and an in-vehicle apparatus mounted on a vehicle. In the navigation system, the in-vehicle apparatus includes a vehicle navigation unit to guide the vehicle from a vehicle navigation starting point to a vehicle navigation destination, and the mobile terminal includes: a display unit to present image information; a walking navigation unit to guide a route for movement on foot from a walking navigation starting point to a walking navigation destination; and a starting point output unit to output, to the display unit, a photographed image of surrounding of the vehicle navigation destination, and auxiliary information indicating the walking navigation starting point by combining with the photographed image.

A computer program product according to a second aspect of the present invention stores a navigation program to be executed in a mobile terminal provided with a display unit. The navigation program causes the mobile terminal to realize: guiding a route for movement on foot from a walking navigation starting point to a walking navigation destination; and outputting, to the display unit, a photographed image externally received and auxiliary information indicating the walking navigation starting point by combining with the photographed image.

An in-vehicle apparatus according to a third aspect of the present invention is an in-vehicle apparatus provided in a vehicle equipped with a camera. The in-vehicle apparatus includes: an image input unit to be inputted with a photographed image obtained by photographing surrounding by the camera; an auxiliary information creation unit to, on the basis of a predetermined point, a location where the photographed image has been photographed, and an optical axis direction of the camera when the photographed image has been photographed, create auxiliary information indicating the predetermined point by combining with the photographed image; and an in-vehicle communication unit to externally transmit the photographed image and the auxiliary information.

### Advantageous Effects of Invention

According to the present invention, a walking navigation starting point can be indicated intelligibly.

### Brief Description of Drawings

[FIG. 1] FIG. 1 is a diagram showing a configuration of a navigation system in a first embodiment.
[FIG. 2] FIG. 2 is a hardware configuration diagram of an in-vehicle apparatus in the first embodiment.
[FIG. 3] FIG. 3 is a hardware configuration diagram of a mobile terminal in the first embodiment.
[FIG. 4] FIG. 4 is a functional block diagram of the in-vehicle apparatus in the first embodiment.
[FIG. 5] FIG. 5 is a functional block diagram of the mobile terminal in the first embodiment.
[FIG. 6] FIG. 6 is a view showing an example of auxiliary information displayed on a mobile display unit.
[FIG. 7] FIG. 7 is a view showing a different example of the auxiliary information displayed on the mobile display unit.
[FIG. 8] FIG. 8 is a flow chart showing an operation of a navigation system 1 in the first embodiment.
[FIG. 9] FIG. 9 is a flow chart showing an operation of a navigation system in Modification 1.
[FIG. 10] FIG. 10 is a flow chart showing an operation of a navigation system in a second embodiment.
[FIG. 11] FIG. 11 is a flow chart showing an operation of a navigation system in a third embodiment.
[FIG. 12] FIG. 12 is a flowchart showing an operation in which the mobile terminal presents a user with information for returning to a vehicle after arrival at a walking navigation destination.
[FIG. 13] FIG. 13 is a diagram showing a configuration of a navigation system in a fourth embodiment.
[FIG. 14] FIG. 14 is a flow chart showing an operation of a navigation system in the fourth embodiment.
[FIG. 15] FIG. 15 is a flow chart showing an operation of a navigation system in a fifth embodiment.
[FIG. 16] FIG. 16 is a view showing walking navigation information and walking navigation starting point information displayed on a mobile display unit in the fifth embodiment.
[FIG. 17] FIG. 17 is a functional block diagram of an in-vehicle apparatus in a sixth embodiment.
[FIG. 18] FIG. 18 is a functional block diagram of a mobile terminal in the sixth embodiment.
[FIG. 19] FIG. 19 is a flow chart showing an operation of a navigation system in the sixth embodiment.
[FIG. 20] FIG. 20 is a flow chart showing an operation of a navigation system in a seventh embodiment.
[FIG. 21] FIG. 21 is a view showing a state of supplying a program to the mobile terminal with use of a computer program product.

### Description of Embodiments

### - First Embodiment -

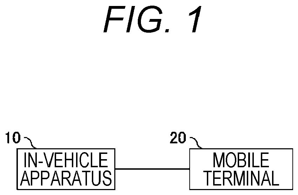

Hereinafter, a first embodiment of a navigation system 1 according to the present invention will be described with reference to FIGS. 1 to 8.

### (Configuration)

FIG. 1 is a diagram showing a configuration of the navigation system 1. The navigation system 1 is a system that provides end-to-end navigation, and configured by an in-vehicle apparatus 10 and a mobile terminal 20. The end-to-end navigation in the present embodiment is configured by vehicle navigation that is road guide and guidance related to movement of a vehicle, and walking navigation that is road guide and guidance related to movement on foot. A departure place in the vehicle navigation is called "vehicle navigation starting point", and a destination in the vehicle navigation is called "vehicle navigation destination" or "vehicle destination". In addition, a departure place in the walking navigation is called "walking navigation starting point", and a destination in the walking navigation is called "walking navigation destination". That is, a starting point of the end-to-end navigation in the present embodiment is the vehicle navigation starting point, and a destination of the end-to-end navigation is the walking navigation destination.

The in-vehicle apparatus 10 and the mobile terminal 20 are connected using a communication function that can be used for connection between terminals such as a universal serial bus (USB), Bluetooth (registered trademark), and a wireless local area network (LAN). However, the in-vehicle apparatus 10 and the mobile terminal 20 each may be connected to a common network, for example, the Internet, and may be connected directly via the Internet or indirectly via another device connected to the Internet.

### (Hardware configuration)

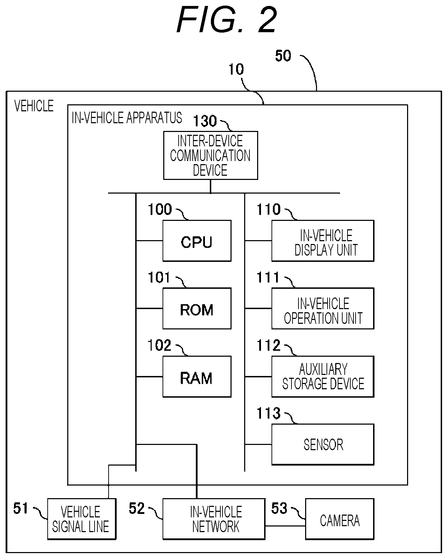

FIG. 2 is a hardware configuration diagram of a vehicle 50. The vehicle 50 includes the in-vehicle apparatus 10, a vehicle signal line 51, an in-vehicle network 52, and a camera 53. The in-vehicle apparatus 10 refers to outputs of various devices provided in the vehicle 50, by being connected to the vehicle signal line 51 and the in-vehicle network 52. The in-vehicle apparatus 10 can refer to, for example, a speed of the vehicle 50, a steering angle of a steering wheel, a position of a shift lever, and a state of a parking brake. The in-vehicle apparatus 10 further acquires an image (hereinafter, referred to as a "photographed image") obtained by photographing an image by the camera 53.

The camera 53 is an optical device that is attached, with a light axis directed to a predetermined position of the vehicle 50, for example, the front of the vehicle 50, and photographs the front and surrounding to output the photographed image. Meanwhile, the camera 53 may have a configuration to be connected to the in-vehicle apparatus 10 via the inter-device communication device 130 with use of a USB, a wireless LAN, or the like.

The in-vehicle apparatus 10 includes a CPU 100, a ROM 101, a RAM 102, an in-vehicle display unit 110, an in-vehicle operation unit 111, an auxiliary storage device 112, a sensor 113, and an inter-device communication device 130.

The CPU 100 controls each unit of the in-vehicle apparatus 10 and executes a car navigation program or the like read into the RAM 102. The ROM 101 is a read-only storage device into which a control program, a car navigation program, and the like are written. The RAM 102 is a device that reads and temporarily stores a program that is stored in the auxiliary storage device 112, and stores work data and the like generated by the CPU 100 in executing the program. The in-vehicle display unit 110 is a device such as a liquid crystal display or an organic electro-luminescence (EL) display that displays image information to a user.

The in-vehicle operation unit 111 is a device such as a button, a switch, a keyboard, or a touch panel with which the user operates the in-vehicle apparatus 10 with a finger.

The auxiliary storage device 112 is a large-capacity storage device that stores various data and the like such as a map database and a setting file to be used by a program such as car navigation, and is, for example, a hard disk drive (HDD) or a solid state drive (SSD).

The sensor 113 includes a GPS receiver to output a location indicated by latitude and longitude on the earth, and a position sensor capable of calculating a positional angle of the vehicle 50.

The inter-device communication device 130 is an interface device for connection with the mobile terminal 20 to exchange data. A connection method may be wired connection compliant with standards such as a USB and a high-definition multimedia interface (HDMI, registered trademark), or may be wireless connection compliant with standards such as IEEE 802.11a/b/g/n of wireless LAN and Bluetooth.

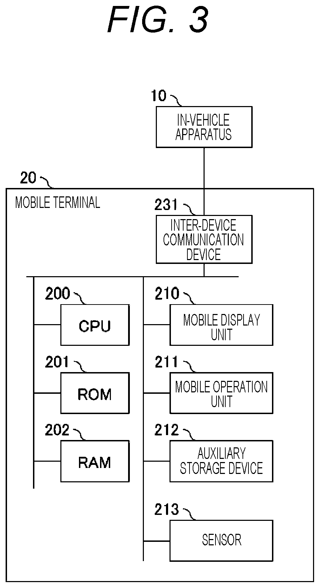

FIG. 3 is a diagram showing a hardware configuration of the mobile terminal 20.

The mobile terminal 20 includes a CPU 200, a ROM 201, a RAM 202, a mobile display unit 210, a mobile operation unit 211, an auxiliary storage device 212, a sensor 213, and an inter-device communication device 231.

The CPU 200 is a device that controls each unit of the mobile terminal 20 and executes a walking navigation program or the like read into the RAM 202. In the ROM 201, a control program, a walking navigation program, and the like are written. The RAM 202 is a device that reads and temporarily stores a program that is stored in the auxiliary storage device 212, and stores work data and the like generated by the CPU 200 in executing the program. The mobile display unit 210 is a device such as a liquid crystal display or an organic EL display that displays image information to the user.

The mobile operation unit 211 is a device such as a button, a switch, a keyboard, or a touch panel with which the user operates the mobile terminal 20 with a finger. The auxiliary storage device 212 is a large-capacity storage device that stores various data and the like such as a map database and a setting file to be used by a program such as car navigation, and is, for example, an HDD or an SSD.

The sensor 213 includes a GPS receiver to output a location indicated by latitude and longitude, and a position sensor capable of calculating a positional angle of the mobile terminal 20.

The inter-device communication device 231 is an interface device for connection with the in-vehicle apparatus 10 to exchange data. A connection method may be wired connection compliant with standards such as a USB and an HDMI, or may be wireless connection compliant with standards such as IEEE 802.11a/b/g/n of wireless LAN and Bluetooth.

### (Functional configuration)

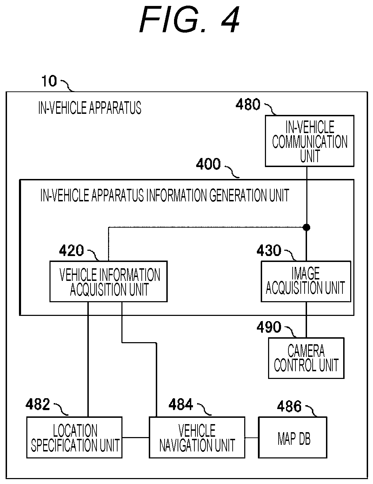

FIG. 4 is a functional block diagram showing functions of the in-vehicle apparatus 10 as functional blocks. The in-vehicle apparatus 10 includes, as functions thereof, an in-vehicle apparatus information generation unit 400, an in-vehicle communication unit 480, a location specification unit 482, a vehicle navigation unit 484, a map database 486, and a camera control unit 490. These functions are implemented as a program that operates on an OS. The program is stored in the ROM 101 or the auxiliary storage device 112, loaded into the RAM 102, and executed by the CPU 100.

The in-vehicle communication unit 480 is a function of providing data communication between with the mobile terminal 20, and is realized by the inter-device communication device 130. The location specification unit 482 is a function of calculating a current location, that is, latitude and longitude, and an orientation of a traveling direction of the vehicle 50 from information acquired from the sensor 113. In the present embodiment, the orientation is to be represented by an angle of 0 to 360 degrees, and 90 degrees as east and 270 degrees as west in clockwise with a predetermined direction, the north for example, as a reference, that is zero degrees.

The vehicle navigation unit 484 provides a vehicle navigation function using data acquired from the location specification unit 482, the map database 486, the vehicle signal line 51, the in-vehicle network 52, and the like. The vehicle navigation function is a function of guiding from a vehicle navigation starting point to a vehicle navigation destination. This vehicle navigation function includes notification that the vehicle 50 has arrived at a set vehicle navigation destination. The map database 486 stores map information to be used by the vehicle navigation unit 484. The camera control unit 490 outputs a photographing command to the camera 53 at every predetermined time, and acquires an image photographed by the camera 53.

The in-vehicle apparatus information generation unit 400 is configured by a vehicle information acquisition unit 420 and an image acquisition unit 430. The vehicle information acquisition unit 420 is connected to the location specification unit 482 and the vehicle navigation unit 484, and acquires current location coordinates of the vehicle 50 and an orientation of the traveling direction of the vehicle 50. When detecting parking and arrival at a vehicle navigation destination of the vehicle 50 under conditions described later, the vehicle information acquisition unit 420 transmits a parking arrival notification indicating parking or arrival, to the mobile terminal 20 via the in-vehicle communication unit 480. The image acquisition unit 430 is connected to the camera control unit 490, and acquires an image of the front of the vehicle 50 and a photographing field angle of the image from the camera control unit 490. The photographed image and the photographing field angle acquired by the image acquisition unit 430 are transmitted to the mobile terminal 20 via the in-vehicle communication unit 480. Note that the camera control unit 490 and the image acquisition unit 430 that acquire the photographed image of the camera 53 also function as a connection interface with the camera 53.

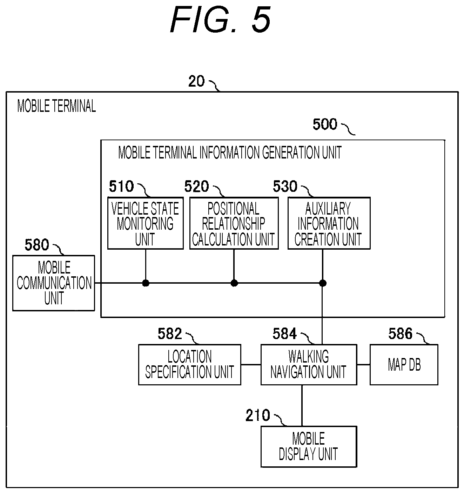

FIG. 5 is a functional block diagram showing functions of the mobile terminal 20 as functional blocks. The mobile terminal 20 includes, as functions thereof, a mobile terminal information generation unit 500, a mobile communication unit 580, a location specification unit 582, a walking navigation unit 584, and a map database 586. These functions are implemented as a program that operates on an OS. The program is stored in the ROM 201 or the auxiliary storage device 212, loaded into the RAM 202, and executed by the CPU 200.

The mobile communication unit 580 is a function of providing data communication between with the in-vehicle apparatus 10, and is realized by the inter-device communication device 231. The location specification unit 582 is a function of calculating a current location, that is, latitude and longitude, and an orientation in which the mobile terminal 20 is directed, from information acquired from the sensor 213. The walking navigation unit 584 provides a walking navigation function by using data acquired from the location specification unit 582, the map database 586, and the like. The walking navigation function is a function of calculating a route from a walking navigation starting point to a walking navigation destination (hereinafter, referred to as "walking navigation route") and guiding a user to the walking navigation destination. The walking navigation function includes a function of drawing a walking navigation route on a map. The map database 586 provides map information to the walking navigation unit 584.

The mobile terminal information generation unit 500 is configured by a vehicle state monitoring unit 510, a positional relationship calculation unit 520, and an auxiliary information creation unit 530.

The vehicle state monitoring unit 510 monitors a state of the vehicle by a notification of arriving at the vehicle navigation destination, a parking notification, or the like, received from the in-vehicle apparatus 10.

The positional relationship calculation unit 520 calculates a positional relationship between a range photographed in the photographed image and the walking navigation starting point. This calculation is performed on the basis of current location coordinates of the vehicle 50, an orientation in which an optical axis of the camera 53 is directed (hereinafter referred to as "photographing orientation"), a field angle of the camera 53, and the walking navigation starting point. From this calculation, for example, it is known that the walking navigation starting point is located at the center of the photographed image, the walking navigation starting point is out of the range of the photographed image and located to the right of the photographed image, and the like.

The auxiliary information creation unit 530 generates auxiliary information to be described later by using the calculation result of the positional relationship calculation unit 520 and the like. This auxiliary information is displayed on the mobile display unit 210 together with the photographed image received from the in-vehicle apparatus 10.

### (Auxiliary information)

The auxiliary information in the present embodiment is information for guiding a user to a walking navigation starting point, and is displayed on the mobile display unit 210 together with a photographed image. Although the walking navigation starting point cannot be represented only by the auxiliary information, the walking navigation starting point can be intelligibly shown by being displayed together with the photographed image.

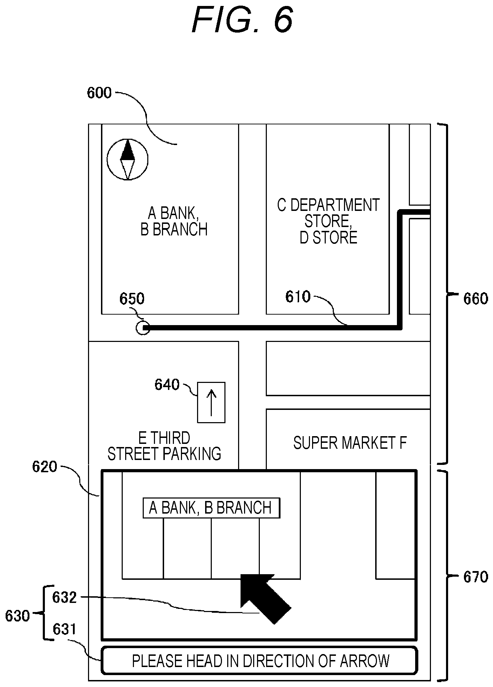

FIG. 6 is a view showing an example of the auxiliary information displayed on the mobile display unit 210. In the example shown in FIG. 6, the walking navigation information 660 and the walking navigation starting point information 670 are displayed on the mobile display unit 210. The walking navigation information 660 includes a map 600, a walking navigation route 610, a parked vehicle 640, and a walking navigation starting point 650. The walking navigation starting point information 670 includes a photographed image 620 and auxiliary information 630. The photographed image 620 is a latest photographed image received by the mobile terminal 20 from the in-vehicle apparatus 10. The auxiliary information 630 is formed of a message 631 that is a character string "Please head in the direction of the arrow" and an arrow 632 indicating a walking navigation starting point. Note that the arrow shown inside the parked vehicle 640 indicates the front of the vehicle, that is, the direction in which the camera 53 photographs.

In the example shown in FIG. 6, on the basis of a positional relationship between "A bank, B branch" photographed in the photographed image 620 and the walking navigation starting point, the arrow 632 points in front of "A bank, B branch" and the message 631 prompts movement in the direction of the arrow 632. Note that the message 631 may be a message indicating the walking navigation starting point 650 without using the arrow 632, for example, "Please head to the center of the picture". In addition, the arrow 632 is an example of a marker, and a marker having another shape, for example, a round or square marker may be used.

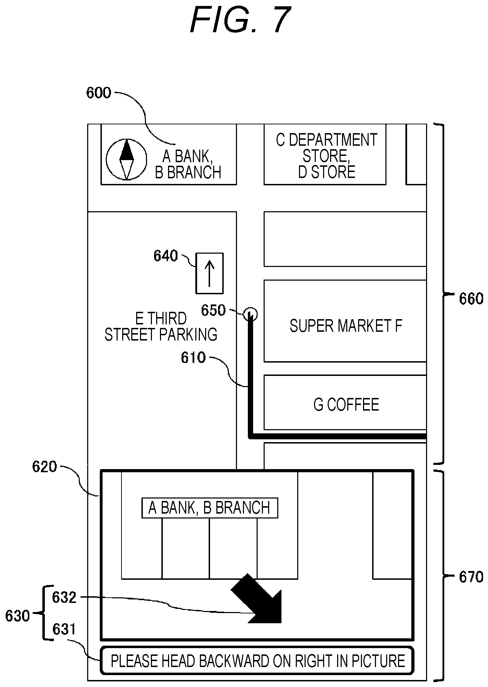

FIG. 7 is a view showing a different example of the auxiliary information displayed on the mobile display unit 210. When FIG. 7 is compared with FIG. 6, there is a difference in that the walking navigation starting point 650 has moved to the front of "supermarket F". In the example shown in FIG. 7, on the basis of the positional relationship between "A bank, B branch" photographed in the photographed image 620 and the walking navigation starting point, the arrow 632 points the direction of "supermarket F", that is, toward the lower right in the drawing, and the message 631 prompts movement to backward on the right, similarly to the arrow 632. Meanwhile, the message 631 may prompt movement in the direction indicated by the arrow 632 similarly to FIG. 6.

The user only needs to search for and head in the direction in which the own view of the user coincides with display contents of the photographed image 620, the arrow 632, and the message 631, on the basis of the walking navigation starting point information 670 shown in FIGS. 6 and 7. The user does not have to think of the direction from the walking navigation starting point 650 displayed on the map of the walking navigation information 660 and the location of the parked vehicle 640, and can intuitively recognize the direction to be headed.

### (Flow chart)

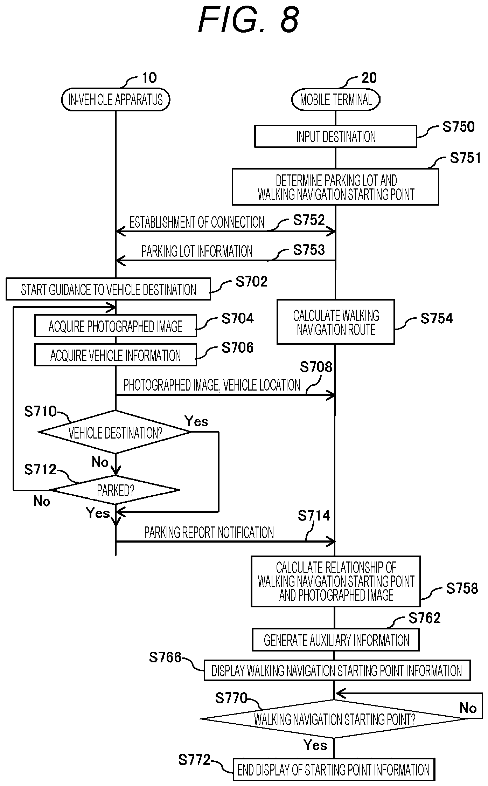

FIG. 8 is a flow chart showing an operation of the navigation system 1 in the first embodiment.

First, the user operates the mobile operation unit 211 to input a destination, that is, a walking navigation destination on the mobile terminal 20 (S750). Then, the mobile terminal 20 searches for a parking lot present in the vicinity of the inputted walking navigation destination by using a map DB 586, and determines a parking lot for parking the vehicle 50 and a walking starting point, that is, a walking navigation starting point. (S751). Note that, the user may input a destination and a parking location, or the mobile terminal 20 may present some candidates for the parking location, and the candidate selected by the user may be set as the parking location. The walking navigation starting point is, for example, a road in contact with the determined parking lot, and is set as an intersection point of the road and a straight line connecting the walking navigation destination from the central area of the determined parking lot. Further, location information of an entrance of the parking lot may be added to the determination of the walking navigation starting point.

Thereafter, the user having the mobile terminal 20 approaches the vehicle 50 to get on, and when the in-vehicle apparatus 10 and the mobile terminal 20 approach each other with a distance enabling communication, the connection between the both is established. When connection is established (S752), the mobile terminal 20 transmits parking lot information, that is, information of a vehicle navigation destination, to the in-vehicle apparatus 10 (S753). After that, the walking navigation unit 584 calculates a walking navigation route from the walking navigation starting point to the walking navigation destination (S754), and the mobile terminal 20 waits for communication from the in-vehicle apparatus 10.

When the in-vehicle apparatus 10 receives the information of the vehicle navigation destination, the in-vehicle apparatus information generation unit 400 is activated, the vehicle navigation unit 484 searches for a route from the current location to the vehicle navigation destination, and guidance of the vehicle 50 to the vehicle navigation destination is started (S702). Next, the image acquisition unit 430 of the in-vehicle apparatus 10 acquires a photographed image and information of a field angle from the camera control unit 490 (S704). Then, the vehicle information acquisition unit 420 acquires vehicle information, that is, current location coordinates of the vehicle 50 and an orientation of the traveling direction of the vehicle 50, from the location specification unit 482 and the vehicle navigation unit 484 (S706). Note that, as described above, in the present embodiment, since the camera 53 is directed to the front of the vehicle 50, the traveling direction of the vehicle 50 coincides with a direction of an optical axis of the camera 53.

Thereafter, the in-vehicle apparatus 10 transmits the photographed image, the field angle, and the vehicle information to the mobile terminal 20 (S708). Next, the in-vehicle apparatus 10 determines whether or not the vehicle 50 has arrived at the vehicle navigation destination (S710), and whether or not parking of the vehicle 50 has been completed (S712). When affirmative determination is made in either one of S710 and S712, the in-vehicle apparatus 10 transmits a parking arrival notification to the mobile terminal 20 (S714). When negative determination is made in both S710 and S712, the process returns to S704. As a result, until the vehicle 50 arrives at the vehicle navigation destination and parking is completed, the in-vehicle apparatus 10 executes steps S704 to S708 at every predetermined time, and transmits the photographed image, the field angle, and the vehicle information to the mobile terminal 20.

When the mobile terminal 20 receives the parking arrival notification from the in-vehicle apparatus 10, the positional relationship calculation unit 520 calculates a positional relationship with a walking navigation starting point in the latest photographed image transmitted last by the in-vehicle apparatus 10, that is, the photographed image obtained by photographing the surrounding of the vehicle navigation destination by the camera 53 immediately before or immediately after the vehicle 50 arrives at the vehicle navigation destination (or immediately before or immediately after the parking is completed) (S758). This calculation is performed on the basis of the latest current location coordinates of the vehicle 50 received from the in-vehicle apparatus 10, the photographing orientation of the camera 53, and the walking navigation starting point determined in step S751. Next, the auxiliary information creation unit 530 generates auxiliary information on the basis of the calculation result of the positional relationship calculation unit 520 (S762), and outputs to the walking navigation unit 584. The auxiliary information is, for example, a combination of a message and an arrow indicating the walking navigation starting point to be displayed on the photographed image.

The walking navigation unit 584 displays the walking navigation starting point information 670 and the walking navigation information 660 on the mobile display unit 210 as shown in FIG. 6 (S766). Subsequently, the walking navigation unit 584 acquires a location of the mobile terminal 20 from the location specification unit 582, and determines whether or not the walking navigation starting point has been reached (S770). When the walking navigation unit 584 determines that the walking navigation starting point has been reached, the process proceeds to step S772. When the walking navigation unit 584 determines that the walking navigation starting point has not been reached, the process remains in step S770. In step S772, the walking navigation unit 584 deletes the walking navigation starting point information 670 from the mobile display unit 210, and displays only the walking navigation information 660 on the mobile display unit 210.

As described above, in the end-to-end navigation system, which is a combination of vehicle navigation and walking navigation, it is possible allow the user to intuitively recognize the direction to be headed, by generating and displaying the auxiliary information indicating where the user should go after getting off the vehicle at a timing when the route guidance is taken over from the vehicle navigation to the walking navigation.

According to the above-described first embodiment, the following working effects can be obtained.
(1) The navigation system 1 includes the mobile terminal 20 and the in-vehicle apparatus 10 mounted on the vehicle 50. The in-vehicle apparatus 10 includes the vehicle navigation unit 484 to guide the vehicle 50 from a vehicle navigation starting point to a vehicle navigation destination. The mobile terminal 20 includes the mobile display unit 210 to present image information; a walking navigation unit 584 to guide a route for movement on foot from a walking navigation starting point to a walking navigation destination; and a starting point output unit, for example, the walking navigation unit 584, to output, to the mobile display unit 210, a photographed image of surrounding of the vehicle navigation destination, and auxiliary information indicating the walking navigation starting point by combining with the photographed image.
   Since the navigation system 1 indicates the walking navigation starting point by combining the photographed image and the auxiliary information, the walking navigation starting point can be shown intelligibly. Although it is possible to indicate the walking navigation starting point by using the walking navigation information 660 shown in FIG. 6, it may be difficult for the user to contrast features such as buildings depicted on the map 600 with objects seen in the eye. Whereas, since the photographed image obtained by photographing by the camera 53 is very close to the user's viewpoint as compared with the map 600, it is easy to contrast features in the photographed image with objects seen in the eye. Therefore, it is effective to use the photographed image in order to indicate the walking navigation starting point. The effects of this configuration are particularly obvious at places visited for the first time.
(2) The in-vehicle apparatus 10 includes: the image acquisition unit 430 to be inputted with a photographed image obtained by photographing surrounding of the vehicle navigation destination by the camera 53 mounted on the vehicle 50; and the in-vehicle communication unit 480 to transmit the photographed image inputted to the image acquisition unit 430, to the mobile terminal 20. The walking navigation unit 584 outputs the photographed image received from the in-vehicle apparatus 10, to the mobile display unit 210.
   Accordingly, the photographed image displayed on the mobile terminal 20 is an image photographed by the camera 53 mounted on the vehicle 50 same as the in-vehicle apparatus 10. Therefore, there is a high possibility that the user has already seen the scenery photographed in the photographed image from inside the vehicle 50, and the user can easily determine the walking navigation starting point.
(3) The in-vehicle apparatus 10 includes a notification unit, that is, the vehicle information acquisition unit 420, to detect that the vehicle 50 has been parked, and transmit a notification indicating parking of the vehicle 50 to the mobile terminal 20. Therefore, the walking navigation starting point information 670 can be displayed on the mobile display unit 210 at an appropriate timing triggered by parking of the vehicle 50.
(4) The in-vehicle communication unit 480 transmits a photographed image inputted to the image acquisition unit 430 to the mobile terminal 20 at every predetermined time until the vehicle information acquisition unit 420 detects parking.
(5) The mobile terminal 20 includes the auxiliary information creation unit 530 to create auxiliary information on the basis of a walking navigation starting point, a location where the photographed image has been photographed, and an optical axis direction of the camera 53 when the photographed image has been photographed. Therefore, the mobile terminal 20 can calculate a relationship between the photographed image and the walking navigation starting point.
(6) The auxiliary information creation unit 530 further uses field angle information of the photographed image to create auxiliary information. Therefore, the mobile terminal 20 can accurately determine whether or not the walking navigation starting point is included in the photographed image, and create as the auxiliary information to present to the user.
(7) The program executed in the mobile terminal 20 provided with the mobile display unit 210 causes the mobile terminal 20 to realize: a walking navigation function of guiding a route for movement on foot from a walking navigation starting point to a walking navigation destination; and a starting point output function of outputting, to the mobile display unit 210, the photographed image 620 externally received and the auxiliary information 630 indicating the walking navigation starting point by combining with the photographed image.

### (Modification 1)

The in-vehicle apparatus 10 does not need to always obtain a photographed image or transmit a photographed image to the mobile terminal 20.

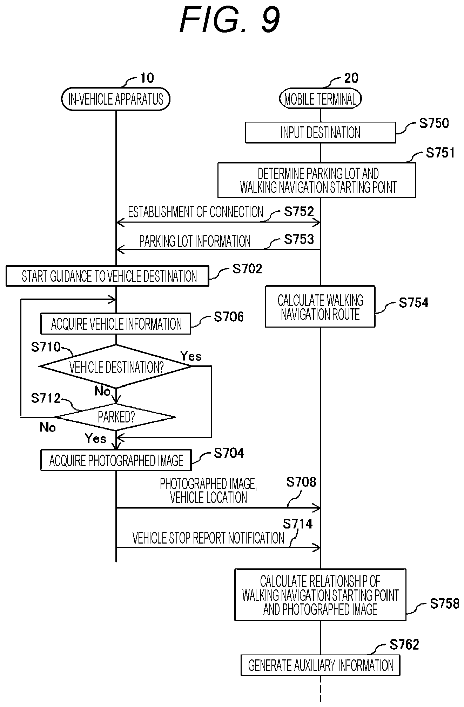

FIG. 9 is a flow chart showing an operation of the navigation system 1 in Modification 1. A difference from FIG. 8 in the first embodiment is the order of the processing performed by the in-vehicle apparatus 10. In Modification 1, when guidance to the vehicle navigation destination is started (S702), the vehicle information acquisition unit 420 acquires vehicle information, that is, current location coordinates of the vehicle 50 and an orientation of the traveling direction of the vehicle 50 (S706). Then, next, the in-vehicle apparatus 10 determines whether or not the vehicle 50 has arrived at the vehicle navigation destination (S710), and whether or not parking of the vehicle 50 has been completed (S712). When affirmative determination is made in either one of S710 and S712, the in-vehicle apparatus 10 acquires a photographed image and information of a field angle (S704), and transmits the acquired photographed image and information of the field angle, and the vehicle information acquired in the most recent step S706, to the mobile terminal 20 (S708). Subsequently, the in-vehicle apparatus 10 transmits a parking arrival notification to the mobile terminal 20 (S714). When negative determination is made in both S710 and S712, the process returns to S706.

According to this Modification 1, in addition to the effects of the first embodiment, the following effects can be obtained.
(8) When the vehicle information acquisition unit 420 detects parking, the in-vehicle communication unit 480 transmits a photographed image inputted to the image acquisition unit 430 to the mobile terminal 20. Therefore, the mobile terminal 20 obtains the photographed image at an appropriate timing immediately before presenting the walking navigation starting point information 670 to the user, enabling reduction of the number of times the in-vehicle apparatus 10 acquires a photographed image and the number of times the in-vehicle apparatus 10 transmits the photographed image to the mobile terminal 20.

### (Modification 2)

Various data stored in the auxiliary storage device 112 of the in-vehicle apparatus 10 may be updateable from another device. This another device may be a device brought inside the vehicle, such as a laptop computer or a storage medium, or a device installed in the vehicle. Further, the another device may be a device that is present outside the vehicle 50 and connected via wireless communication, for example, a server installed in a data center. Furthermore, the program that configures the vehicle navigation unit 484 may also be updateable.

### (Modification 3)

In the first embodiment described above, the auxiliary information 630 is formed of the message 631 or the arrow 632 indicating the walking navigation starting point. However, the auxiliary information 630 may be formed only of the message 631, and the auxiliary information 630 may be formed only of the arrow 632. The message 631 in the case where the auxiliary information 630 is formed only of the message 631 is, for example, "Please head toward the center of the picture".

### (Modification 4)

The walking navigation unit 584 may realize walking navigation without displaying on the mobile display unit 210. In this case, the walking navigation unit 584 performs navigation by voice with use of, for example, a speaker (not shown), and navigation with use of a vibrator (not shown) to indicate a traveling direction and a right/left turn position. Further, in this case, only the walking navigation starting point information 670 is displayed on the mobile display unit 210, while the walking navigation information 660 is not displayed.

### (Modification 5)

The walking navigation information 660 may not be displayed on the mobile display unit 210 together with the walking navigation starting point information 670. That is, only the walking navigation starting point information 670 may be displayed on the mobile display unit 210 until the walking navigation starting point is reached, and the walking navigation information 660 may be displayed instead of the walking navigation starting point information 670 when the walking navigation starting point is reached.

### (Modification 6)

The functions of the in-vehicle apparatus 10 in the first embodiment may be shared and realized by a plurality of devices. For example, the vehicle may include an in-vehicle apparatus, a camera, and a car navigation device, the camera 53 may have a function of transmitting a photographed image to the mobile terminal 20, and the car navigation device may have a function of the vehicle navigation unit 484. In this case, the in-vehicle apparatus has a configuration excluding the vehicle navigation unit 484, a map DB 486, the image acquisition unit 430, and the camera control unit 490, from the configuration of the in-vehicle apparatus 10 in the first embodiment.

### (Modification 7)

As long as the field angle of the camera 53 is fixed, for example, as long as a focal point of a lens provided in the camera 53 is fixed, the image acquisition unit 430 need not acquire the field angle and need not transmit to the mobile terminal 20. In this case, the auxiliary information creation unit 530 of the mobile terminal 20 generates the auxiliary information by using a known field angle of the camera 53.

### (Modification 8)

In the first embodiment, the walking navigation function provided to the mobile terminal 20 and the vehicle navigation function provided to the in-vehicle apparatus 10 may be realized by a server (not shown) connected by wireless communication. For example, when the user inputs a walking destination to the mobile terminal 20, the mobile terminal 20 may transmit information indicating the walking destination to the server (not shown), and receive a parking location, a walking navigation start, and a walking navigation route from the server.

### (Modification 9)

The user may input a walking navigation destination into the in-vehicle apparatus 10, and the in-vehicle apparatus 10 may notify the mobile terminal 20 of the walking navigation destination. In this case, the mobile terminal 20 may set the vehicle navigation destination, or the in-vehicle apparatus 10 may set the car navigation destination and notify the mobile terminal 20 of the car navigation destination together with the walking navigation destination.

### (Modification 10)

The in-vehicle apparatus 10 may perform processing on a photographed image of the camera 53 and transmit to the mobile terminal 20. This processing is crop processing to cut out a part of the photographed image, distortion removal processing to correct distortion of the photographed image based on lens distortion, and viewpoint conversion processing to perform processing as if photographed from a different viewpoint.

### (Modification 11)

In the first embodiment described above, determination is made as to whether or not the vehicle 50 has arrived at the vehicle navigation destination (S710) and whether or not parking of the vehicle 50 has been completed (S712), and the in-vehicle apparatus 10 transmits a parking arrival notification to the mobile terminal 20 when affirmative determination is made in either one (S714). However, the in-vehicle apparatus 10 may transmit the parking arrival notification to the mobile terminal 20 when it is determined that the vehicle 50 has arrived at the vehicle navigation destination and the parking of the vehicle 50 has been completed. In other words, S710 and S712 may be evaluated as the AND condition rather than being evaluated as the OR condition.

### - Second Embodiment -

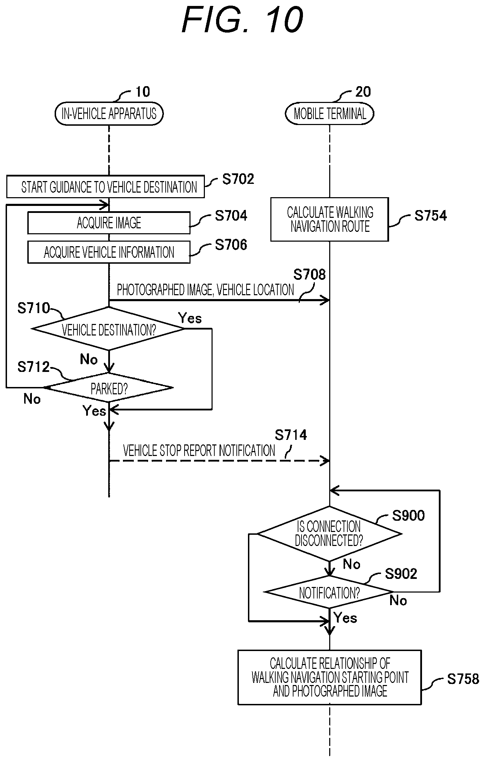

A second embodiment of a navigation system 1 according to the present invention will be described with reference to FIG. 10. In the following explanation, the same reference numerals are given to the same constituent elements as those of the first embodiment, and the differences will mainly be described. The points not specifically described are the same as those of the first embodiment. The present embodiment is different from the first embodiment mainly in that a mobile terminal 20 starts walking navigation even without receiving an explicit notification from an in-vehicle apparatus 10.

### (Configuration)

A hardware configuration and a functional configuration of the navigation system 1 in the second embodiment are similar to those in the first embodiment. However, an operation of a program stored in a ROM of the mobile terminal 20 is different from that of the first embodiment. Further, in a vehicle state monitoring unit 510 of the mobile terminal 20, a mobile communication unit 580 detects that communication with a vehicle 50 has been disconnected. Then, when the vehicle state monitoring unit 510 detects the disconnection, an auxiliary information creation unit 530 creates auxiliary information.

### (Flow chart)

FIG. 10 is a flow chart showing an operation of the navigation system 1 in the second embodiment. Note that, in FIG. 10, the processing to be executed prior to step S754 and the processing to be executed after step S758 of the mobile terminal 20 are omitted because both the processing items and the processing order thereof are similar to those of the first embodiment.

In the mobile terminal 20, a walking navigation unit 584 calculates a walking navigation route from a walking navigation starting point to a walking navigation destination (S754). Then, the vehicle state monitoring unit 510 determines whether or not connection with the in-vehicle apparatus 10 has been disconnected (S900), and whether or not a parking arrival notification has been received from the in-vehicle apparatus 10 (S902). The mobile terminal 20 proceeds to step S758 when affirmative determination is made in either one of S900 and S902, and returns to S900 when negative determination is made in both S900 and S902. The processing in and after step S758 is the same as that in the first embodiment, and thus the description thereof is omitted.

According to the above-described second embodiment, the following working effects can be obtained.
(9) The mobile terminal 20 includes a disconnection detection unit, that is, the vehicle state monitoring unit 510, to detect disconnection of the wireless communication connection with the in-vehicle apparatus 10. When the vehicle state monitoring unit 510 detects disconnection, the auxiliary information creation unit 530 creates auxiliary information. A starting point output unit, for example, the walking navigation unit 584 outputs a photographed image 620 and auxiliary information 630 to a mobile display unit 210 when the auxiliary information creation unit 530 creates the auxiliary information.

Therefore, even when the in-vehicle apparatus 10 cannot transmit a parking arrival notification such as in a case where the user turns off the power of the in-vehicle apparatus 10 immediately after arriving at the vicinity of the vehicle destination and the like, the mobile terminal 20 can display the walking navigation starting point information 670.

### - Third Embodiment -

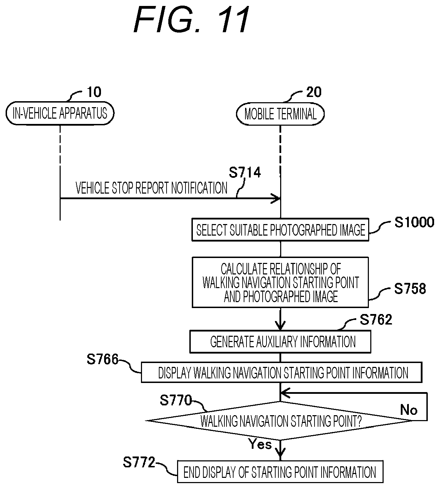

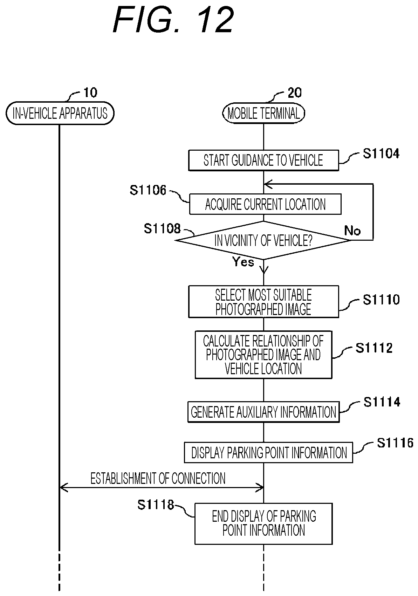

A third embodiment of a navigation system 1 according to the present invention will be described with reference to FIGS. 11 and 12. In the following explanation, the same reference numerals are given to the same constituent elements as those of the first embodiment, and the differences will mainly be described. The points not specifically described are the same as those of the first embodiment. The present embodiment is different from the first embodiment mainly in that a mobile terminal 20 selects a suitable photographed image from photographed images received from an in-vehicle apparatus 10, and uses the selected photographed image for guidance to a walking navigation starting point, and in that guidance on returning to the vehicle after arrival at the walking navigation destination is also performed.

### (Configuration)

A hardware configuration and a functional configuration of the navigation system 1 in the third embodiment are similar to those in the first embodiment. However, an operation of a program stored in a ROM of the mobile terminal 20 is different from that of the first embodiment. Further, in a RAM 202 or an auxiliary storage device 212 of the mobile terminal 20, a photographed image received from the in-vehicle apparatus 10 is accumulated. When the photographed image of a predetermined number, for example, 100, are accumulated, the oldest photographed image is erased each time the photographed image is newly stored.

### (Flow chart)

FIG. 11 is a flow chart showing an operation of the navigation system 1 in the third embodiment. An operation of the in-vehicle apparatus 10 is the same as that of the first embodiment, and only step S714 is described in FIG. 11. An operation of the mobile terminal 20 is the same as that of the first embodiment up to step S754, and only operations in and after receiving a notification of step S714 of the in-vehicle apparatus 10 will be described.

When receiving a parking arrival notification from the in-vehicle apparatus 10, the mobile terminal 20 selects a suitable photographed image from photographed images accumulated in the RAM 202 or the auxiliary storage device 212 (S1000). A selection criterion of the suitable photographed image is not limited to one, but it is as follows, for example. That is, first, it is more preferable that a position where the photographed image has been photographed is closer to the current location of the mobile terminal 20. Second, it is more preferable that the walking navigation starting point is closer to the central part of the photographed image. Note that this step may be performed by a positional relationship calculation unit 520 or may be performed by an auxiliary information creation unit 530.

Next, the positional relationship calculation unit 520 of the mobile terminal 20 calculates a positional relationship with the walking navigation starting point in the photographed image selected in step S1000 (S758). Thereafter, the mobile terminal 20 executes steps S762, S766, S770, and S772 similarly to the first embodiment. However, in these steps, the photographed image selected in step S1000 is used instead of the latest photographed image received from the in-vehicle apparatus 10.

FIG. 12 is a flow chart showing an operation in which the mobile terminal 20 presents a user with information for returning to a vehicle 50 after arrival at a walking navigation destination. First, a walking navigation unit 584 of the mobile terminal 20 executes walking navigation (S1104). In this walking navigation, a current location or a previously set walking navigation destination is set as the walking navigation starting point. Further, a self-location acquired last from the in-vehicle apparatus 10 (hereinafter referred to as "the final vehicle location") and a location of the parking lot determined in step S751 are set as the walking navigation destination.

Next, the mobile terminal 20 acquires a current location (S1106), and determines whether or not to be in the vicinity of the vehicle 50 (S1108). Being in the vicinity of the vehicle 50 means that, for example, the current location acquired in step S1106 is within a predetermined distance from the final vehicle location. When the mobile terminal 20 determines to be in the vicinity of the vehicle 50, the process proceeds to step S1110. When the mobile terminal 20 determines not to be in the vicinity of the vehicle 50, the process returns to step S1106.

The processing of the following steps S1110 to S1116 corresponds to the processing of S1000 to S766 in FIG. 10. In step S1110, the mobile terminal 20 selects a suitable photographed image from photographed images accumulated in the RAM 202 or the auxiliary storage device 212. A selection criterion of the suitable photographed image is not limited to one, but it is as follows, for example. That is, first, it is more preferable that the final vehicle location is closer to the current location of the mobile terminal 20. Second, it is more preferable that the final vehicle location is closer to the central part of the photographed image. Next, the positional relationship calculation unit 520 of the mobile terminal 20 calculates a positional relationship with the final vehicle location in the photographed image selected in step S1110 (S1112). Then, the auxiliary information creation unit 530 generates auxiliary information indicating the final vehicle location (S1114), and the walking navigation unit 584 displays, on the mobile display unit 210, the photographed image selected in step S1110 and the auxiliary information generated in step S1114, as parking point information indicating the parking location of the vehicle 50 (S1116).

When the user approaches the vehicle 50 with reference to the parking point information, and the in-vehicle apparatus 10 and the mobile terminal 20 approach each other with distance enabling communication, the connection between the both is established. Then, the mobile terminal 20 ends the display of the parking point information on the mobile display unit 210 (S1118).

According to the above-described third embodiment, the following working effects can be obtained.
(10) The mobile terminal 20 includes an image selection unit (step S1000 in FIG. 11) to select one photographed image on the basis of a stop position of the vehicle 50 and a walking navigation starting point, from a plurality of photographed images received from the in-vehicle apparatus 10. The auxiliary information creation unit 530 operates using the photographed image selected by the image selection unit. Therefore, without limiting to the image photographed last, the in-vehicle apparatus 10 can use an image suitable for indicating the walking navigation starting point, to indicate the walking navigation starting point.
(11) The mobile terminal 20 includes a stop point output unit (step S1116 in FIG. 12) to output, to the mobile display unit 210, a photographed image and stop auxiliary information indicating a stop position of the vehicle by combining with the photographed image. Therefore, it is possible to assist in searching for the parking location of the vehicle 50 when the user returns to the vehicle 50 after arrival at the walking navigation destination.

### - Fourth Embodiment -

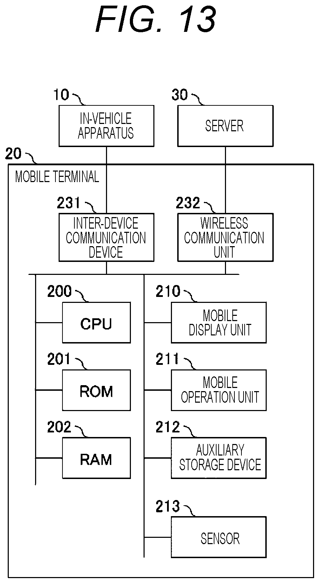

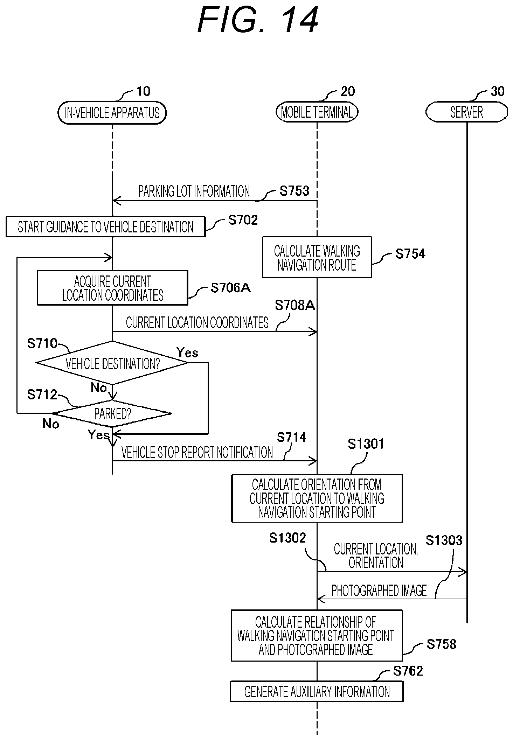

A fourth embodiment of a navigation system 1 according to the present invention will be described with reference to FIGS. 13 and 14. In the following explanation, the same reference numerals are given to the same constituent elements as those of the first embodiment, and the differences will mainly be described. The points not specifically described are the same as those of the first embodiment. The present embodiment is different from the first embodiment mainly in that a mobile terminal 20 receives a photographed image from a server.

### (Configuration)

FIG. 13 is a diagram showing a configuration of the navigation system 1 in the fourth embodiment. The navigation system 1 in the fourth embodiment is configured by an in-vehicle apparatus 10, the mobile terminal 20, and a server 30.

A hardware configuration of the mobile terminal 20 further includes a wireless communication unit 232 to wirelessly communicate with the server 30 outside a vehicle, in addition to the configuration of the first embodiment. The wireless communication unit 232 is compatible with, for example, any one or a plurality of communication standards of 3G, long term evolution (LTE), and a wireless LAN. The in-vehicle apparatus 10 need not include a camera control unit 490 in the present embodiment. Meanwhile, a vehicle 50 need not include a camera 53.

The server 30 includes an image database in which photographed images are accumulated, and a server communication unit capable of communicating with the mobile terminal 20. The photographed image stored in the image database is associated with location information indicating a photographed location, for example, latitude and longitude, and information of an orientation of an optical axis of a camera when photographed, in other words, a photographed orientation. As described later, when a photographed image is transmitted to the mobile terminal 20, not only this photographed image but also information of a location where the photographed image has been photographed and a photographed orientation is also transmitted.

### (Operation of server)

When receiving the location information and the orientation information from the mobile terminal 20, the server 30 extracts a photographed image closest to received conditions from the plurality of photographed images stored in the image database, as a photographed image of surrounding of the vehicle navigation destination, and transmits to the mobile terminal 20. That is, the server 30 transmits a photographed image having location information closest to the location indicated by the location information received from the mobile terminal 20, and having orientation information closest to the orientation indicated by the orientation information received from the mobile terminal 20, to the mobile terminal 20. When the photographed image under the best condition is different in both the location information and the orientation information, the location information may be prioritized or the direction information may be prioritized. Further, location information and orientation information may be evaluated with predetermined weighting.

### (Flow chart)

FIG. 14 is a flow chart showing an operation of the navigation system 1 in the fourth embodiment. An operation of the mobile terminal 20 is similar to that of the first embodiment up to the calculation of the walking navigation route (S754).

When receiving parking lot information from the mobile terminal 20, the in-vehicle apparatus 10 starts guidance to a vehicle destination, that is, a vehicle navigation destination similarly to the first embodiment (S702), and subsequently acquires current location coordinates of the vehicle 50 (S706A). That is, in the fourth embodiment, a photographed image and an orientation of a traveling direction of the vehicle 50 are not acquired. Next, the in-vehicle apparatus 10 transmits the current location coordinates of the vehicle 50 acquired in step S706A to the mobile terminal 20 (S708A). Subsequent operations of the in-vehicle apparatus 10 are similar to those of the first embodiment, and thus the description thereof is omitted.

When receiving a parking arrival notification (S714) from the in-vehicle apparatus 10, the mobile terminal 20 calculates the orientation to the walking navigation starting point from the current location, that is, the current location coordinates received last from the in-vehicle apparatus 10 (S1301). Next, the mobile terminal 20 requests the server 30 for a photographed image of surrounding of the vehicle navigation destination, by transmitting the current location and the orientation calculated in step S1301 to the server 30 with the wireless communication unit 232 (S1302).

The server 30 extracts the photographed image closest to the received conditions of the current location and the orientation from the image database as a photographed image of surrounding of the vehicle navigation destination. Then, the server 30 transmits the extracted photographed image, the location where the extracted photographed image has been photographed, and the photographing orientation of the extracted photographed image to the mobile terminal 20 (S1303).

When receiving the photographed image and the like from the server 30, the mobile terminal 20 executes the processing in and after step S758. The processing in and after step S758 is similar to that of the first embodiment except using the photographed image, the photographing orientation, and the position at which the photographed image has been photographed received from the server 30, in place of the photographed image, the photographing orientation, and the current location received from the in-vehicle apparatus 10.

According to the above-described fourth embodiment, the following working effects can be obtained.
(12) The mobile terminal 20 includes the wireless communication unit 232 to perform wireless communication with the server 30 in which a plurality of photographed images including a photographed image of surrounding of a vehicle navigation destination are stored in advance. A walking navigation unit 584 outputs, to a mobile display unit 210, the photographed image of surrounding of the vehicle navigation destination extracted from the plurality of photographed images and transmitted to the mobile terminal 20 by the server 30, and received by the wireless communication unit 584. Therefore, the vehicle 50 need not include a camera.
(13) The in-vehicle apparatus 10 includes a vehicle information acquisition unit 420 to detect that the vehicle 50 has been parked, and an in-vehicle communication unit 480 to transmit a notification indicating parking of the vehicle to the mobile terminal 20 when the vehicle information acquisition unit 420 detects parking. When the mobile terminal 20 receives the notification, the wireless communication unit 232 of the mobile terminal 20 requests the server 30 for a photographed image. Therefore, even when the vehicle 50 does not include a camera, the mobile terminal 20 can acquire the photographed image.

### (Modification 1 of Fourth Embodiment)

The in-vehicle apparatus 10 need not transmit current location coordinates of the vehicle 50 to the mobile terminal 20. In this case, the mobile terminal 20 acquires the current location from a location specification unit 582 in step S1301, and uses this in place of the current location coordinates of the vehicle 50. Further, in this case, the in-vehicle apparatus 10 need not include the vehicle information acquisition unit 420.

### (Modification 2 of Fourth Embodiment)

The server may perform processing on a photographed image obtained in advance and transmit to the mobile terminal 20. This processing is crop processing to cut out a part of the photographed image, distortion removal processing to correct distortion of the photographed image based on lens distortion, and viewpoint conversion processing to perform processing as if photographed from a different viewpoint.

In addition, on the basis of survey data obtained in advance, that is, three-dimensional shape data and color information, the server may create an image similar to a photographed image that can be obtained by photographing a specific direction from a specific location, and transmit to the mobile terminal 20. The specific location in this case is a location of the vehicle 50, and the specific direction is a direction from the location of the vehicle 50 toward the walking navigation starting point.

Furthermore, the server may create an image on the basis of a three-dimensional model of a building around the current location of the vehicle 50, and transmit this as a photographed image to the mobile terminal 20.

### - Fifth Embodiment -

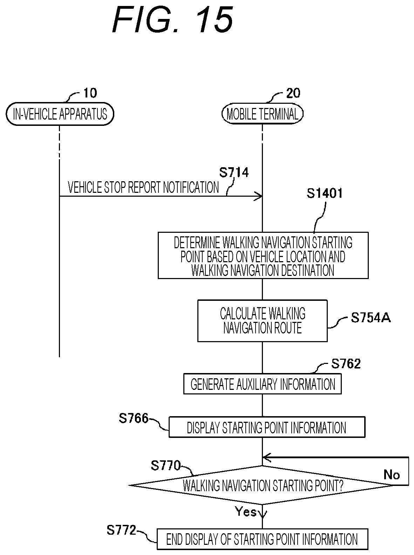

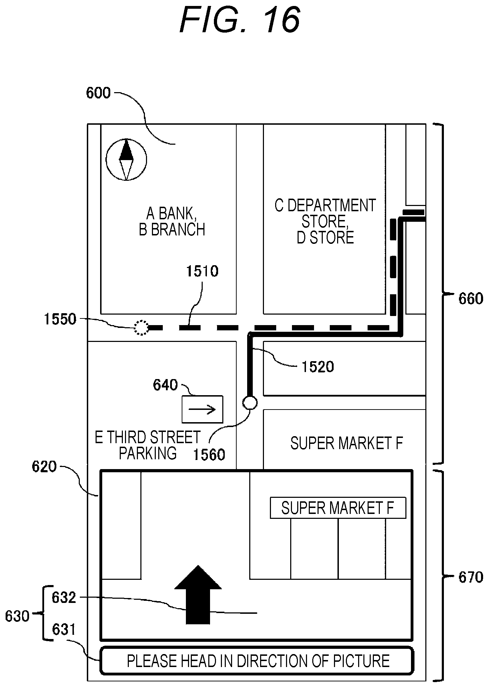

A fifth embodiment of a navigation system 1 according to the present invention will be described with reference to FIGS. 15 and 16. In the following explanation, the same reference numerals are given to the same constituent elements as those of the first embodiment, and the differences will mainly be described. The points not specifically described are the same as those of the first embodiment. The present embodiment is different from the first embodiment mainly in that a mobile terminal 20 determines a walking navigation starting point again after a vehicle 50 is parked.

### (Configuration)

A hardware configuration and a functional configuration of the navigation system 1 in the fifth embodiment are similar to those in the first embodiment. However, an operation of a program stored in a ROM of the mobile terminal 20 is different from that of the first embodiment.

### (Flow chart)

FIG. 15 is a flow chart showing an operation of the navigation system 1 in the fifth embodiment. Since an operation of an in-vehicle apparatus 10 is the same as that of the first embodiment, only step S714 is described in FIG. 15. An operation of the mobile terminal 20 is the same as that of the first embodiment up to step S754, and only operations in and after receiving a notification of step S714 of the in-vehicle apparatus 10 will be described in FIG. 15.

When receiving a parking arrival notification from the in-vehicle apparatus 10, the mobile terminal 20 determines a walking navigation starting point again on the basis of the latest vehicle location received from the in-vehicle apparatus 10 and a walking navigation destination inputted in step S750 (S1401). Although the walking navigation starting point has already been determined in step S751, a representative position of the parking lot, for example, a center position of the parking lot or a position planned to be parked is used in step S751. On the other hand, in this step, a position at which the vehicle 50 is actually parked is used for the calculation.

Next, the mobile terminal 20 calculates again a walking navigation route from the walking navigation starting point calculated in step S1401 to the walking navigation destination inputted in step S750 (S754A). However, in a case where the walking navigation starting point determined in step S1401 is the same as the walking navigation starting point determined in step S751, step S754A may be omitted. The mobile terminal 20 executes the processing in and after step S762, by using the walking navigation starting point determined in step S1401 and the walking navigation route generated in step S754A.

### (Operation example)

FIG. 16 is a view showing walking navigation information 660 and walking navigation starting point information 670 displayed on a mobile display unit 210 in the fifth embodiment. Note that, what is actually displayed out of the walking navigation information 660 is indicated by a solid line, and what is not actually displayed is indicated by a broken line.

First, the walking navigation information 660 will be described. Reference numeral 1550 denotes a walking navigation starting point determined in step S751, that is, determined initially, and reference numeral 1560 denotes a walking navigation starting point determined in step S1401, that is, determined after parking of the vehicle 50. Reference numeral 1510 denotes a walking navigation route calculated in step S754, that is, calculated initially, and reference numeral 1520 denotes a walking navigation route calculated in step S754A, that is, calculated after parking of the vehicle 50.

As can be seen from being indicated by the broken line, the route 1510 and the walking navigation starting point 1550 are not actually displayed on the mobile display unit 210. By executing steps S1401 and S1402 of FIG. 15, the walking navigation starting point and the walking navigation route are updated. Therefore, the updated walking navigation starting point and walking navigation route represented by reference numerals 1560 and 1520 are actually displayed on the mobile display unit 210.

Next, the walking navigation starting point information 670 will be described. Out of the photographed image 620 and auxiliary information 630 forming the walking navigation starting point information 670, the photographed image 620 is similar to that of the first embodiment in that it is the latest photographed image received by the mobile terminal 20 from the in-vehicle apparatus 10. However, the auxiliary information 630 is different from that of the first embodiment in that the auxiliary information 630 is created using the walking navigation starting point determined in step S1401, in other words, the updated walking navigation starting point. Since the auxiliary information 630 is created using the updated walking navigation starting point, as shown in FIG. 16, a message 631 and an arrow 632 indicate the updated walking navigation starting point 1560.

According to the above-described fifth embodiment, the following working effects can be obtained.
(14) The mobile terminal 20 includes a changing unit (S1401 in FIG. 15) to change a walking navigation starting point on the basis of a stop position of the vehicle 50 and a walking navigation destination. The auxiliary information creation unit 530 creates auxiliary information on the basis of the walking navigation starting point changed by the changing unit, a location where a photographed image has been photographed, and an optical axis direction of a camera when the photographed image has been photographed. Therefore, on the basis of the stop position of the vehicle 50, it is possible to flexibly change the walking navigation starting point and reduce the burden on the user.

### - Sixth Embodiment -

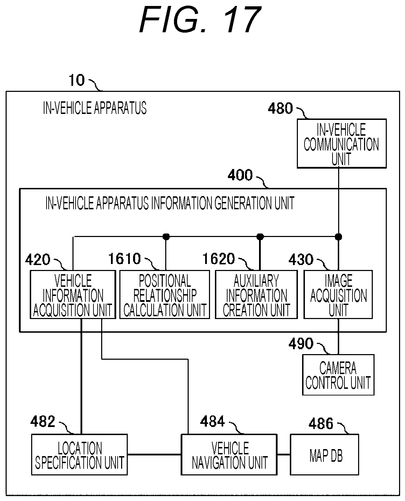

A sixth embodiment of a navigation system 1 according to the present invention will be described with reference to FIGS. 17 to 19. In the following explanation, the same reference numerals are given to the same constituent elements as those of the first embodiment, and the differences will mainly be described. The points not specifically described are the same as those of the first embodiment. The present embodiment is different from the first embodiment mainly in that an in-vehicle apparatus 10 instead of a mobile terminal 20 generates walking navigation starting point information 670 and walking navigation information 660.

### (Configuration)

A hardware configuration of the navigation system 1 in the sixth embodiment is similar to that of the first embodiment. However, programs stored in ROMs of the in-vehicle apparatus 10 and the mobile terminal 20 are different from those of the first embodiment, and a functional configuration is different from that of the first embodiment as follows.

FIG. 17 is a functional block diagram representing functions of the in-vehicle apparatus 10 according to the sixth embodiment as functional blocks. The in-vehicle apparatus 10 further includes a positional relationship calculation unit 1610 and an auxiliary information creation unit 1620 as functions thereof, in addition to the functions in the first embodiment. A function and operation of the positional relationship calculation unit 1610 correspond to the positional relationship calculation unit 520 of the mobile terminal 20 in the first embodiment. A function and operation of the auxiliary information creation unit 1620 correspond to the auxiliary information creation unit 530 of the mobile terminal 20 in the first embodiment. The auxiliary information creation unit 1620 transmits the generated auxiliary information to the mobile terminal 20.

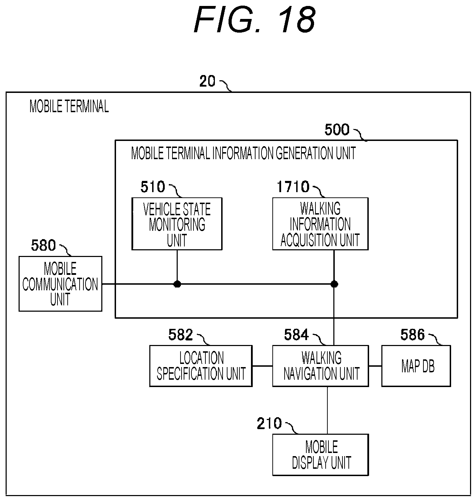

FIG. 18 is a functional block diagram representing functions of the mobile terminal 20 according to the sixth embodiment as functional blocks. In the mobile terminal 20, as the function thereof, the positional relationship calculation unit 520 and the auxiliary information creation unit 530 are deleted from the functions in the first embodiment, and a walking information acquisition unit 1710 is further included. The walking information acquisition unit 1710 outputs the auxiliary information received from the in-vehicle apparatus 10 to a walking navigation unit 584.

### (Flow chart)

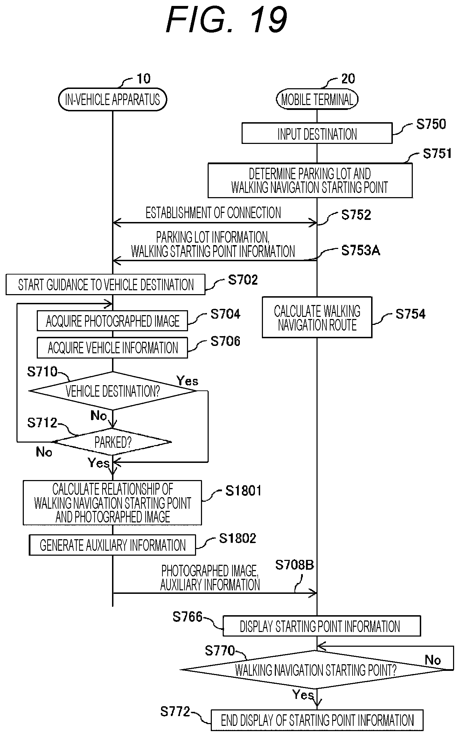

FIG. 19 is a flow chart showing an operation of the navigation system 1 in the sixth embodiment. Operations of step S750 and step S751 of the mobile terminal 20 are similar to those in the first embodiment. When connection with the in-vehicle apparatus 10 is established (S752), the mobile terminal 20 transmits information of the walking navigation starting point to the in-vehicle apparatus 10 in addition to parking lot information (S753A).

An operation of the in-vehicle apparatus 10 is similar to that of the first embodiment until an affirmative determination is made in step S712. However, the in-vehicle apparatus 10 does not transmit information to the mobile terminal 20 in step S708. In the in-vehicle apparatus 10, when affirmative determination is made in step S712, the positional relationship calculation unit 1610 calculates a positional relationship with a walking navigation starting point in the photographed image (S1801). This calculation is performed on the basis of the latest current location coordinates of a vehicle 50 acquired in step S706, a traveling direction of the vehicle 50, and the walking navigation starting point received in step S753A.

Next, the auxiliary information creation unit 1620 of the in-vehicle apparatus 10 generates auxiliary information on the basis of the calculation result of the positional relationship calculation unit 1610 (S1802). Then, an in-vehicle communication unit 480 of the in-vehicle apparatus 10 transmits the latest photographed image acquired in step S704 and the auxiliary information generated in step S1802, to the mobile terminal 20 (S708B).

The walking information acquisition unit 1710 of the mobile terminal 20 that has received this outputs the auxiliary information to the walking navigation unit 584. Operations of the mobile terminal 20 in and after step S766 are similar to those of the first embodiment, and thus the description thereof is omitted.

According to the above-described sixth embodiment, the following working effects can be obtained.
(15) The in-vehicle apparatus 10 includes: the auxiliary information creation unit 1620 to create auxiliary information on the basis of a walking navigation starting point, a location where a photographed image has been photographed, and an optical axis direction of a camera 53 when the photographed image has been photographed; and an auxiliary information transmission unit (S708B in FIG. 19) to transmit auxiliary information to the mobile terminal 20. Therefore, the processing load of the mobile terminal 20 can be reduced by the in-vehicle apparatus 10 creating the auxiliary information.
(16) The in-vehicle apparatus 10 provided in the vehicle 50 equipped with the camera 53 includes: an image acquisition unit 430 to be inputted with a photographed image obtained by photographing surrounding by the camera 53; the auxiliary information creation unit 1620 to create auxiliary information indicating a predetermined point by combining with the photographed image on the basis of the predetermined point, a location where the photographed image has been photographed, and an optical axis direction of the camera 53 when the photographed image has been photographed; and the in-vehicle communication unit 480 to externally transmit the photographed image and the auxiliary information.

Therefore, the processing load of the mobile terminal 20 can be reduced since the in-vehicle apparatus 10 also creates the auxiliary information.

### (Modification 1 of Sixth Embodiment)

The mobile terminal 20 may include a positional relationship calculation unit 520 and an auxiliary information creation unit 530, and the in-vehicle apparatus 10 may execute step S708 similarly to the first embodiment. In this case, when detecting that connection with the in-vehicle apparatus 10 is disconnected or that the in-vehicle apparatus 10 does not communicate for a predetermined time, the mobile terminal 20 executes processing in and after step S758 in the first embodiment.

According to this modification, even when step S708B is not executed, such as when the user turns off the in-vehicle apparatus 10 immediately after the vehicle 50 reaches the vehicle navigation destination, the mobile terminal 20 can display the walking navigation starting point information 670. Further, when step S708B is executed, the processing load on the mobile terminal 20 can be reduced by the in-vehicle apparatus 10 creating the auxiliary information as in the sixth embodiment.

### (Modification 2 of Sixth Embodiment)

The map database 486 provided in the in-vehicle apparatus 10 may include not only information of a road but also information on a sidewalk, and the in-vehicle apparatus 10 may calculate the walking navigation route and transmit to the mobile terminal 20. In this case, the mobile terminal 20 receives a walking navigation route from the in-vehicle apparatus 10 instead of executing step S754 shown in FIG. 19. Then, the mobile terminal 20 performs display and navigation of the walking navigation information 660 by using the received walking navigation route.

According to this modification, the processing load of the mobile terminal 20 can be further reduced.

The program of the mobile terminal 20 is stored in the ROM 201, but the program may also be stored in the auxiliary storage device 212. In addition, the mobile terminal 20 may include an input/output interface (not shown), and the program may be read from another device via the input/output interface and a medium that can be used by the mobile terminal 20 when necessary. Here, the medium refers to, for example, a storage medium attachable to and detachable from the input/output interface, or a communication medium, that is, a network such as a wired, wireless, or light, or a carrier wave or a digital signal propagating through the network. In addition, part or all of the functions realized by the program may be realized by a hardware circuit or an FPGA.

### - Seventh Embodiment -

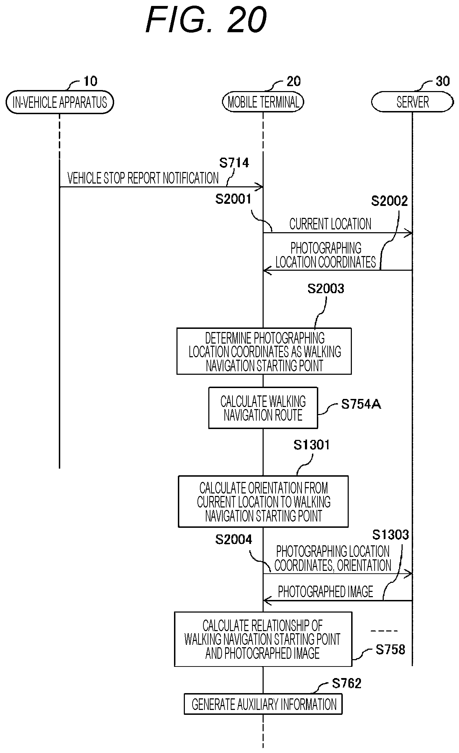

A seventh embodiment of a navigation system 1 according to the present invention will be described with reference to FIG. 20. In the following explanation, the same reference numerals are given to the same constituent elements as those of the fourth embodiment, and the differences will mainly be described. The points not specifically described are the same as those of the fourth embodiment. There is a difference from the fourth embodiment mainly in that a mobile terminal 20 determines a walking navigation starting point again on the basis of a photographed image location acquired from a server 30 after parking of a vehicle 50.

### (Configuration)

A hardware configuration and a functional configuration of the navigation system 1 in the seventh embodiment are similar to those in the fourth embodiment. However, an operation of a program stored in a ROM 201 of the mobile terminal 20 and an operation of the server 30 are different from those of the fourth embodiment.

### (Flow chart)

FIG. 20 is a flow chart showing an operation of the navigation system 1 in the seventh embodiment. Since an operation of an in-vehicle apparatus 10 is the same as that of the fourth embodiment, only step S714 is described in FIG. 20. An operation of the mobile terminal 20 is the same as that of the fourth embodiment up to step S714, and only operations in and after receiving a notification of step S714 of the in-vehicle apparatus 10 will be described in FIG. 20.

When receiving a vehicle stop report notification from the in-vehicle apparatus 10 (S714), the mobile terminal 20 transmits current location information to the server 30 (S2001). The server 30 specifies a photographed image having location information closest to a location indicated by the current location information received from the mobile terminal 20, and transmits photographing location coordinates of the photographed image to the mobile terminal 20 (S2002).

The mobile terminal 20 determines the photographing location coordinates received from the server 30 as a starting point of walking navigation (S2003), and calculates a walking navigation route (S754A). An orientation from the current location to the starting point of the walking navigation, that is, the photographing location coordinates of the photographed image stored in the server 30 is calculated (S1301), the photographing location coordinates and the orientation are transmitted to the server 30 (S2004), and the photographed image of the walking navigation starting point is acquired from the server 30 (S1303).

According to the above-described seventh embodiment, the following working effects can be obtained.

The mobile terminal 20 sets again the photographing location coordinates of the photographed image stored in the server 30 as a starting position of the walking navigation. Thus, by searching for an image of the server 30 with, as a reference, the starting position of the walking navigation set independently of the photographed image stored in the server 30 as in the fourth embodiment, it is possible to prevent the occurrence of a situation where there is no image that meets the conditions.

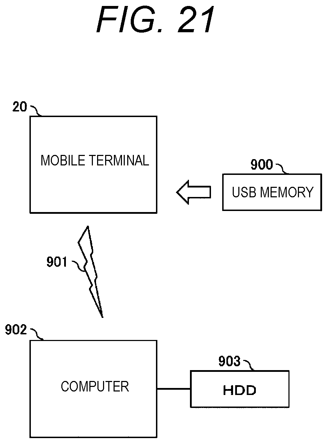

The program for operating the mobile terminal in each embodiment and modification described above can be provided through a recording medium such as a CD-ROM, or a data signal such as the Internet. FIG. 21 is a view showing this state. The mobile terminal 20 is provided with a program via a USB memory 900. Further, the mobile terminal 20 has a function of connecting with a communication line 901. A computer 902 is a server computer that provides the above program, and stores the program in a recording medium such as a hard disk 903. The communication line 901 is a communication line such as the Internet, or a dedicated communication line, or the like. The computer 902 reads out the program by using the hard disk 903, and transmits the program to the mobile terminal 20 via the communication line 901. That is, the program is transmitted via the carrier wave as a data signal via the communication line 901. Thus, the program can be supplied as various forms of computer-readable computer program product such as a recording medium and a data signal (carrier wave).

The above-described embodiments and modifications each may be combined. While various embodiments and modifications have been described above, the present invention is not limited to these contents. Other embodiments considered within the technical idea of the present invention are also included within the scope of the present invention.

The contents disclosed in the following priority basic application are incorporated herein by reference.

Japanese Patent Application No. 2017-007480 (filed on January 19, 2017)

### Reference Signs List

- 1: navigation system
- 10: in-vehicle apparatus
- 20: mobile terminal
- 53: camera
- 210: mobile display unit
- 231: inter-device communication device
- 420: vehicle information acquisition unit
- 430: image acquisition unit
- 480: in-vehicle communication unit
- 482: location specification unit
- 484: vehicle navigation unit
- 500: mobile terminal information generation unit
- 510: vehicle state monitoring unit
- 520, 1610: positional relationship calculation unit
- 520, 1610: auxiliary information creation unit
- 580: mobile communication unit
- 582: location specification unit
- 584: walking navigation unit
- 610: walking navigation route
- 620: photographed image
- 630: auxiliary information
- 650: walking navigation starting point

## Claims

1. A navigation system comprising a mobile terminal and an in-vehicle apparatus mounted on a vehicle, wherein
the in-vehicle apparatus comprises a vehicle navigation unit to guide the vehicle from a vehicle navigation starting point to a vehicle navigation destination, and
the mobile terminal comprises:
a display unit to present image information;
a walking navigation unit to guide a route for movement on foot from a walking navigation starting point to a walking navigation destination; and
a starting point output unit to output, to the display unit, a photographed image of surrounding of the vehicle navigation destination, and auxiliary information indicating the walking navigation starting point by combining with the photographed image.

2. The navigation system according to claim 1, wherein
the in-vehicle apparatus further comprises:
an image input unit to be inputted with a photographed image obtained by photographing surrounding of the vehicle navigation destination by a camera mounted on the vehicle; and
an image transmission unit to transmit the photographed image inputted to the image input unit, to the mobile terminal, and
the starting point output unit outputs the photographed image received from the in-vehicle apparatus, to the display unit.

3. The navigation system according to claim 1, wherein
the mobile terminal further comprises a wireless communication unit to perform wireless communication with a server in which a plurality of photographed images including a photographed image of surrounding of the vehicle navigation destination are stored in advance, and
the starting point output unit outputs, to the display unit, a photographed image of surrounding of the vehicle navigation destination that has been extracted from the plurality of photographed images and transmitted to the mobile terminal by the server, and received by the wireless communication unit.

4. The navigation system according to claim 2, wherein
the in-vehicle apparatus further comprises:
a parking detection unit to detect that the vehicle has been parked; and
a notification unit to transmit a notification indicating parking of the vehicle to the mobile terminal when the parking detection unit detects parking, and
the starting point output unit of the mobile terminal outputs the photographed image and the auxiliary information to the display unit when the mobile terminal receives the notification.

5. The navigation system according to claim 3, wherein
the in-vehicle apparatus further comprises:
a parking detection unit to detect that the vehicle has been parked; and
a notification unit to transmit a notification indicating parking of the vehicle to the mobile terminal when the parking detection unit detects parking, and
the wireless communication unit of the mobile terminal requests the server for the photographed image when the mobile terminal receives the notification.

6. The navigation system according to claim 4, wherein
the image transmission unit transmits the photographed image inputted to the image input unit to the mobile terminal at every predetermined time until the parking detection unit detects parking, or when the parking detection unit detects parking.

7. The navigation system according to claim 1, wherein
the in-vehicle apparatus further comprises:
an auxiliary information creation unit to create the auxiliary information, based on the walking navigation starting point, a location where the photographed image has been photographed, and an optical axis direction of a camera when the photographed image has been photographed; and
an auxiliary information transmission unit to transmit the auxiliary information to the mobile terminal.

8. The navigation system according to claim 1, wherein
the mobile terminal further comprises:
an auxiliary information creation unit to create the auxiliary information, based on the walking navigation starting point, a location where the photographed image has been photographed, and an optical axis direction of a camera when the photographed image has been photographed.

9. The navigation system according to claim 7 or 8, wherein
the auxiliary information creation unit further uses field angle information of the photographed image to create the auxiliary information.

10. The navigation system according to claim 8, wherein
the mobile terminal further comprises
a disconnection detection unit to detect disconnection of wireless communication connection with the in-vehicle apparatus,
the auxiliary information creation unit creates the auxiliary information when the disconnection detection unit detects the disconnection, and
the starting point output unit outputs the photographed image and the auxiliary information to the display unit when the auxiliary information creation unit creates the auxiliary information.

11. The navigation system according to claim 8, wherein
the mobile terminal further comprises
an image selection unit to select, from a plurality of the photographed images, one of the photographed images based on a parking location of the vehicle and the walking navigation starting point, and
the auxiliary information creation unit and the starting point output unit operate using the photographed image selected by the image selection unit.

12. The navigation system according to claim 8, wherein
the mobile terminal further comprises
a changing unit to change the walking navigation starting point based on a parking location of the vehicle and the walking navigation destination, and
the auxiliary information creation unit creates the auxiliary information, based on the walking navigation starting point changed by the changing unit, a location where the photographed image has been photographed, and an optical axis direction of the camera when the photographed image has been photographed.

13. The navigation system according to claim 1, wherein
the mobile terminal further comprises
a parking point output unit to output, to the display unit, parking point information indicating a parking location of the vehicle, by combining with the photographed image.

14. A computer program product storing a navigation program to be executed in a mobile terminal comprising a display unit, the navigation program causes
a mobile terminal to realize:
guiding a route for movement on foot from a walking navigation starting point to a walking navigation destination; and
outputting, to the display unit, a photographed image externally received and auxiliary information indicating the walking navigation starting point by combining with the photographed image.

15. An in-vehicle apparatus provided in a vehicle equipped with a camera, the in-vehicle apparatus comprising:
an image input unit to be inputted with a photographed image obtained by photographing surrounding by the camera;
an auxiliary information creation unit to, based on a predetermined point, a location where the photographed image has been photographed, and an optical axis direction of the camera when the photographed image has been photographed, create auxiliary information indicating the predetermined point by combining with the photographed image; and
an in-vehicle communication unit to externally transmit the photographed image and the auxiliary information.

16. The navigation system according to claim 1, wherein
the mobile terminal further comprises
a wireless communication unit to perform: wireless communication with a server in which a plurality of photographed images including a photographed image of surrounding of the vehicle navigation destination are stored in advance; transmit vehicle location information indicating a vehicle location to the server; and receive, from the server, a photographed image extracted from the plurality of photographed images by the server based on the vehicle location information, and photographed image location information indicating a photographing location of the image,
the walking navigation unit guides a route for movement on foot from a walking starting point to a walking destination, with the photographing location corresponding to the received photographed image location information as the walking starting point, and
the starting point output unit outputs, to the display unit, the auxiliary information and a photographed image extracted from the plurality of photographed images by the server based on the vehicle location information.
